(19) Europäisches Patentamt
European Patent Office
Office européen des brevets

(11) Publication number: **0 321 434 B1**

(12) **EUROPEAN PATENT SPECIFICATION**

(45) Date of publication of patent specification :
08.01.92 Bulletin 92/02

(51) Int. Cl.⁵ : **B60K 17/22, B60K 17/35**

(21) Application number : **88890280.6**

(22) Date of filing : **11.11.88**

(54) **All-wheel drive vehicle power train.**

(30) Priority : **15.12.87 AT 3296/87**

(43) Date of publication of application :
**21.06.89 Bulletin 89/25**

(45) Publication of the grant of the patent :
**08.01.92 Bulletin 92/02**

(84) Designated Contracting States :
**DE FR GB IT**

(56) References cited :
**EP-A- 0 217 124**
**DE-A- 3 442 584**
**DE-A- 3 630 348**
**DE-B- 1 630 879**
**GB-A- 775 212**
**GB-A- 2 160 620**
**US-A- 4 141 428**
**US-A- 4 605 087**

(73) Proprietor : **STEYR-DAIMLER-PUCH**
**AKTIENGESELLSCHAFT**
**Franz-Josefs-Kai 51**
**A-1010 Wien (AT)**

(72) Inventor : **Cameron, Dugald**
**1653 Blairmoor Court**
**Grosse Pointe Woods MI 48236 (US)**
Inventor : **Friedrich, Karl**
**Seggauberg 154**
**A-8430 Leibnitz (AT)**
Inventor : **Zmugg, Rudolf**
**Lockwiesenweg 50**
**A-8055 Graz (AT)**
Inventor : **Resele, Peter**
**St. Peter Hauptstrasse 31e**
**A-8042 Graz (AT)**

# Description

This invention relates to a motor vehicle with a permanently driven front axle and a rear axle driven via a drive shaft, part of which is a universal joint shaft, a viscuous coupling and a lockable overrunning clutch, the rear axle drive consisting of a differential and an angular drive and being contained in a housing provided with a tubular neck portion for the drive shaft.

In a known motor vehicle of this kind (DE-A-3317247) the viscuous coupling is located in front of the tubular neck portion of a housing and is linked up with the overrunning clutch which is connected with the housing of the front axle drive by the universal joint shaft. In one embodiment, the viscuous coupling which at the same time constitutes the differential is accomodated in the rear axle drive housing, followed by two overrunning clutches and then by the driving trains to the rear wheels. In any case the tubular neck portion is comparatively short and is secured to the frame at a location spaced a relatively short distance in front of the axis of the rear axle drive. Due to this short lever arm, the rear axle drive torque creates high reaction forces between neck portion and frame.

The close connection of the overrunning clutch with the front axle drive housing leads to the transmission of vibrations from the engine via the front axle drive housing to the overrunning clutch, rendering the disposition of operating means for locking the overrunning clutch difficult. Furthermore the accomodation of the overrunning clutch in immediate vicinity of the front axle drive housing is not always feasible, particularly not when an originally front wheel driven vehicle is to be converted later on into a four wheel driven vehicle.

In the embodiment with two overrunning clutches immediately preceding the driving trains to the rear wheels, the expenditure is increased by the use of two such clutches and by the higher torque they must transmit.

It is also known from the practical world to flange-mount a tube to the tubular neck portion of the rear axle drive housing in order to increase the lever arm. But these are different designs without viscuous coupling and without overrunning clutch.

It is therefore the object of the present invention to improve the aforesaid motor vehicle so as to obtain an advantageous accomodation of viscuous coupling and overrunning clutch and a favourable support of the wheel reaction torque.

In accordance with the invention an oil-tight housing enclosing the overrunning clutch is connected to the tubular neck portion, a torque tube enclosing the drive shaft is flange-mounted to the housing, the front region of the torque tube is connected to the frame and the viscuous coupling is located in front of the torque tube.

By this, the rear axle drive housing is extended not only by its tubular neck portion, but also by the overrunning clutch housing and the torque tube enclosing the drive shaft whose front end is secured to the frame. Thus, the reaction forces of the wheel-torque imparted to the frame are low due to the long lever arm. The overrunning clutch is located in front of the rear axle drive and can be dimensioned for small forces, and it has a housing of it's own so that the most suitable lubricating oil can be selected independent of the rear axle drive. Furthermore the overrunning clutch is less exposed to vibrations than it would be when rigidly connected with the engine unit and therefore operating means for locking the overrunning clutch do not pose a problem. The viscuous coupling located outside the torque tube can easily be adapted to various torques by varying its diameter and is surrounded by ambient air for ample heat dissipation.

A considerable simplification in design is obtained by directly flange-mounting the universal joint shaft of the drive shaft to the housing of the viscuous coupling.

An embodyment of the invention will now be described by way of example and with reference to the accompanying drawings, in which :

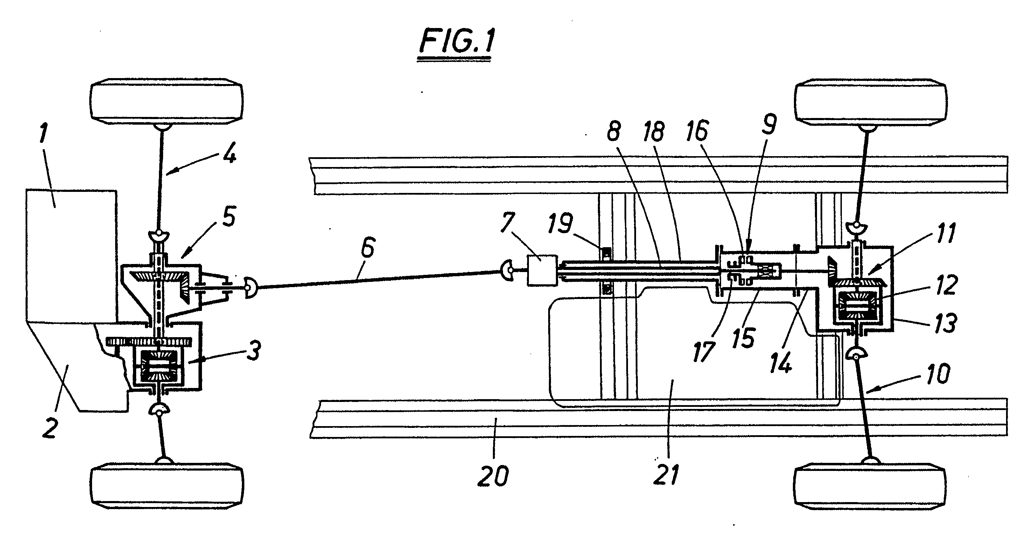

— Figure 1 is a schematic representation of the entire motor vehicle,

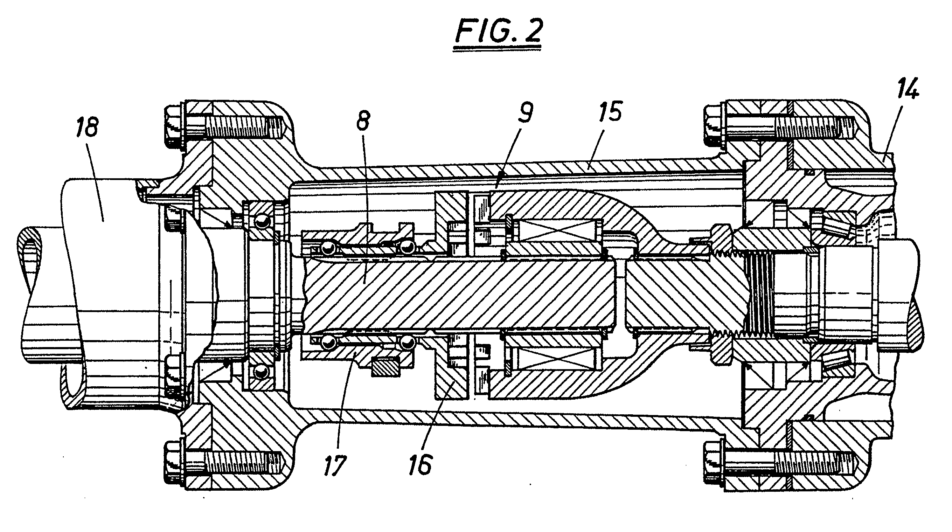

— Figure 2 is an enlarged axial sectional view showing the overrunning clutch located in front of the rear axle drive,

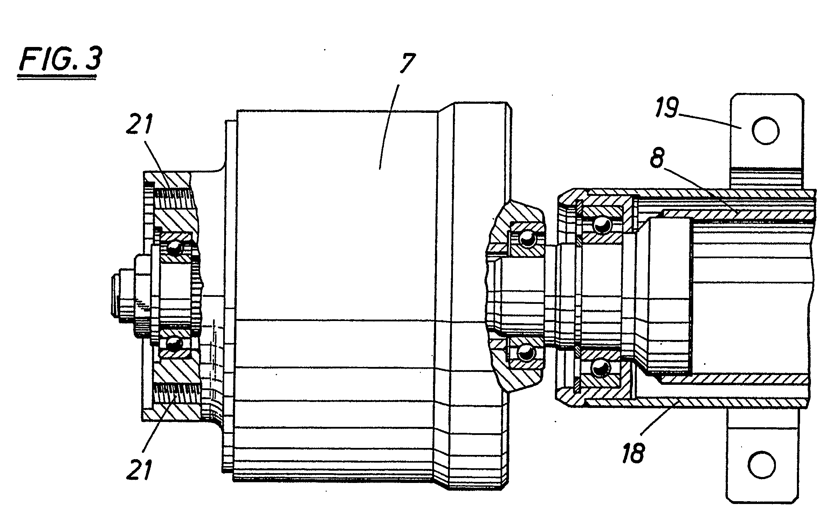

— Figure 3 is an enlarged partial sectional view showing the forward end portion of the torque tube together with the viscuous clutch.

The motor vehicle according to the invention comprises a front axle 4 permanently driven by an engine 1 via a change-gear transmission 2 and a differential 3. The rear axle 10 is driven from an angular drive 5 via a universal joint shaft 6, a viscuous coupling 7, a rigid shaft 8 and a lockable overrunning clutch 9, the rear axle drive comprising an angular drive 11 and a differential 12. The housing 13 of the rear axle drive 11, 12 presents a forward protruding tubular neck portion 14 to which an oil-tight housing 15 accomodating the overrunning clutch 9 is flange-mounted. The latter can be locked by a fork sleeve 17 comprising a dog clutch plate 16, the parts 16, 17 being fitted non-rotatably on the rigid part 8 of the drive shaft 6, 8. The arrangement for locking the overrunning clutch by shifting the parts 16, 17 is generally known and not shown in detail.

The part 8 of the drive shaft 6, 8 is enclosed by a torque tube 18 flange-mounted to the housing 16 of the overrunning clutch 9 and secured in the region of its forward end to a crossbeam of the frame 20 by a clamp 19. The viscuous coupling 7 is located adjacent to the torque tube 18, the universal joint shaft 6 of the drive shaft 6, 8 being flange-mounted to the housing of the viscuous coupling 7 with bolts screwed into tapped bores 21. The comparatively large fuel tank 22 is indicated in thin lines.

## Claims

1. Motor vehicle with a permanently driven front axle (4) and a rear axle (10) driven via a drive shaft (6, 8), part of which is a universal joint shaft (6), a viscuous coupling (7) and a lockable overrunning clutch (9), the rear axle drive consisting of a differential (12) and an angular drive (11) and being contained in a housing (13) provided with a tubular neck portion (14) for the drive shaft (8) **characterized by** an oil-tight housing (15) enclosing the overrunning clutch (9) and being connected to the tubular neck portion (14), a torque tube (18) enclosing the drive shaft (6, 8) and flange-mounted to the housing (15), the front region of the torque tube (18) being connected to the frame (20) and the viscuous coupling (7) being located immediately in front of the torque tube (18).

2. Motor vehicle according to claim 1, **characterized in that** the universal joint shaft (6) of the drive shaft (6, 8) is flange-mounted directly to the housing of the viscuous coupling (7).

## Patentansprüche

1. Kraftfahrzeug mit ständig angetriebener Vorderachse (4) und einer Hinterachse (10), welche über eine einen Gelenkwellenteil (6) aufweisende Antriebswelle (6, 8), eine Flüssigkeitsreibungskupplung (7) und einen überbrückbaren Freilauf (9) angetrieben ist, wobei der Hinterachsantrieb aus einem Differential (12) und einem Winkeltrieb (11) besteht und von einem Gehäuse (13), das einen Rohransatz (14) für die Antriebswelle (8) aufweist umgeben ist, **dadurch gekennzeichnet,** daß ein den Freilauf (9) umhüllendes öldichtes Gehäuse (15) mit dem Rohransatz (14) verbunden ist und daß an diesem Gehäuse (15) ein die Antriebswelle (6, 8) umhüllendes Rohr (18) angeflanscht ist, wobei der vordere Teil des Rohres (18) mit dem Fahrgestell (20) verbunden und die Flüssigkeitsreibungskupplung (7) dem Rohr (18) unmittelbar vorgeordnet ist.

2. Kraftfahrzeug nach Anspruch 1, **dadurch gekennzeichnet,** daß der Gelenkwellenteil (6) der Antriebswelle (6, 8) unmittelbar am Gehäuse der Flüssigkeitsreibungskupplung (7) angeflanscht ist.

## Revendications

1. Véhicule à moteur comportant un essieu avant (4) entraîné en permanence et un essieu arrière (10) entraîné par l'intermédiaire d'un arbre de transmission (6, 8) dont une partie est un arbre à joint de cardan (6), un embrayage hydraulique (7) et un embrayage à roue libre pouvant être bloquée (9), la transmission à l'essieu arrière comprenant un différentiel (12) et un entraînement par engrenage conique (11) et étant logée dans un carter (13) comportant une portion de col tubulaire (14) pour l'arbre de transmission (8), caractérisé par un carter étanche à l'huile (15) renfermant l'embrayage à roue libre (9) et relié à la portion de col tubulaire (14), un tube de réaction (18) renfermant l'arbre de transmission (6, 8) et fixé par brides au carter (15), la région avant du tube de réaction (18) étant reliée au châssis (20) et l'embrayage hydraulique (7) étant situé juste en avant du tube de réaction (18).

2. Véhicule à moteur selon la revendication 1, caractérisé en ce que l'arbre à joint de cardan (6) de l'arbre de transmission (6, 8) est fixé par brides directement au carter de l'embrayage hydraulique (7).

_FIG.1_

EP 0 321 434 B1

FIG.2

FIG. 3